# EUROPEAN PATENT APPLICATION

(11) **EP 0 531 068 A2**
(43) Date of publication of application: **10.03.1993**
(21) Application number: 92307872.9
(22) Date of filing: 28.08.1992
(51) Int. Cl.: F16L 19/065

(54) **Pipe couplings**

(30) Priority: 31.08.1991 GB 9118700
(71) Applicant: VICTAULIC PLC, Hitchin Hertfordshire SG4 0AP (GB)
(72) Inventor: Rex, Brian, Hertfordshire SG5 2HH (GB); Harper, Brian, Hertfordshire SG4 0RS (GB)
(74) Representative: Hutchins, Michael Richard

(57) **Abstract**

The invention provides a pipe coupling 1 having a sleeve 3 for fitting around the end of a pipe 2, 14; an annular securing member 4 for disposal about the end of the pipe, and for securing to the sleeve 1; and wedging means 12, 13 disposed about the pipe between the sleeve 1 and the securing member 4; either the securing member 4 or the sleeve 1 being provided with radially inner 6 and outer 7 portions radially spaced apart to define a space therebetween; the securing member 4, sleeve 1 and wedging member 12, 13 together forming a compression assembly whereby relative axial movement therebetween leading to compression of the annular wedging member 12, 13 between sleeve 1 and securing member 4 causes the wedging member 12, 13 to be thrust into the space 8 between the radially inner 6 and outer 7 spaced apart portions to deform the inner portion 6 radially inwardly such that it engages and seals up against the pipe 2, 14. An advantage of the pipe coupling of the invention is that it enables pipes of different outside diameters and materials to be connected together.

## Description

The invention relates to pipe couplings incorporating a sleeve-like member adapted to encircle the juxtaposed butting ends of pipes to be connected.

It is to be understood that the expression "pipe" as used herein means pipes and tubes as such and also pipe-like members and fittings for use in pipe work such as bends, elbows, "T" connectors and parts and devices adapted to be fitted into pipe work, such as valves and pumps.

Compression couplings for connecting pipes of polyethylene, lead and/or copper for domestic use of small diameter are known in which a sleeve is arranged to encircle the two juxtaposed ends of the pipes to be connected, the sleeve being provided at each end with internal threading, and an axial inwardly tapering surface leading in from each end, externally threaded thrust nuts being provided for screwing into the ends of the sleeve, such that when the inner edges of the thrust nuts engage the tapering portions of the sleeve, those edges are compressed inwardly so as, in use, to engage upon and grip the adjacent ends of the juxtaposed pipes located within the sleeve.

There is, however, a problem in that within the context of domestic piping such as central heating piping or domestic water supply piping, pipes of different outside diameters and different materials cannot readily be accommodated within such fittings which are essentially concerned with a dimension of pipes of similar diameters.

It is an object of the present invention to overcome this problem and to provide a pipe coupling which enables pipes of different outside diameters and materials to be connected together.

In accordance with the present invention, there is provided a pipe coupling having a sleeve for fitting around an end of a pipe; an annular securing member for disposal about the end of the pipe, and for securing to the sleeve; and wedging means disposed about the pipe between the sleeve and the securing member; either the securing member or the sleeve being provided with radially inner and outer portions radially spaced apart to define a space therebetween; the securing member, sleeve and wedging means together forming a compression assembly whereby relative axial movement therebetween leading to compression of the wedging means between sleeve and securing member causes the wedging means to be deformed radially inwardly and to be thrust into the space between the radially inner and outer spaced apart portions to deform the inner portion radially inwardly such that it engages and seals against the pipe.

It will be appreciated that either the annular securing member or the sleeve can be provided with the radially inner and outer portions, but suitably the securing member is thus equipped. Typically the sleeve is threaded (e.g. externally threaded) and the annular securing member is a correspondingly threaded nut.

The sleeve is preferably provided at both ends with a compression assembly of the kind defined hereinabove and, as such, can be used to couple together two pipes.

The securing member, sleeve and wedging means can be configured such that when the outside diameter of the pipe is substantially less than the inner diameter of the sleeve, the wedging means is deformed radially inwardly such that its inner diameter is reduced to a value less than the inner diameter of the sleeve.

The securing member and/or sleeve can be provided with a radially inwardly inclined surface which deforms the wedging means radially inwardly when said relative axial movement takes place.

According to one embodiment of the invention there is provided a pipe coupling having a sleeve for fitting around the juxtaposed ends of two pipes to be connected, means at both ends of the sleeve for sealing therein the ends of the pipes; at least one end (and preferably both ends) being provided with means comprising a nut securable to the sleeve, which nut comprises radially inner and outer portions linked together at the axially outer end of the said nut, the inner and outer portions being radially spaced apart to define a space therebetween; the said means further comprising wedging means disposed about the pipe between the body of the sleeve and the nut; the sleeve, nut and wedging means being configured in such a manner that in use, as the nut is wound onto the sleeve, the wedging means is deformed radially inwardly and is advanced into the said space thereby to deform inwardly the said inner portion such that it eventually grips and seals against the pipe.

The wedging means can be a discrete entity separate from the sleeve and the securing member (e.g. the nut) or it can be an integral part of the sleeve or the securing member. The wedging means can be a unitary element, for example in the form of an annular wedging member disposed about the pipe, or it can be formed as a plurality of individual wedging elements or segments disposed around the pipe. When the wedging means comprises a plurality of such elements, it is preferred that each element is linked to, or abuts against, its neighbouring wedging element. In one preferred embodiment of the invention, the wedging means is an annular wedging member which is integral with the sleeve and extends axially from an axial end of the sleeve. Where the wedging means (e.g. annular wedging member) is a discrete entity, it can take the form of, for example, a ring (e.g. a plastics O-ring), or a generally cylindrical spacer.

The invention will now be illustrated by way of example with reference to the accompanying drawings, in which:-
Figure 1 is a sectional elevation of a pipe coupling in accordance with one embodiment of the invention;
Figure 2 is an exploded view of the pipe coupling of Figure 1 with the portions of the coupling elements above the line X-X being shown in sections;
Figure 3 is a sectional elevation of a pipe coupling in accordance with a second embodiment of the invention;
Figure 4 is a partly sectional exploded view of the pipe coupling of Figure 3;
Figure 5 is a sectional elevation of a pipe coupling in accordance with a third embodiment of the invention;
Figure 6 is a partly sectional exploded view of the pipe coupling of Figure 5; and
Figures 7A to 7D are fragmentary sectional elevations of a fourth embodiment of the invention.

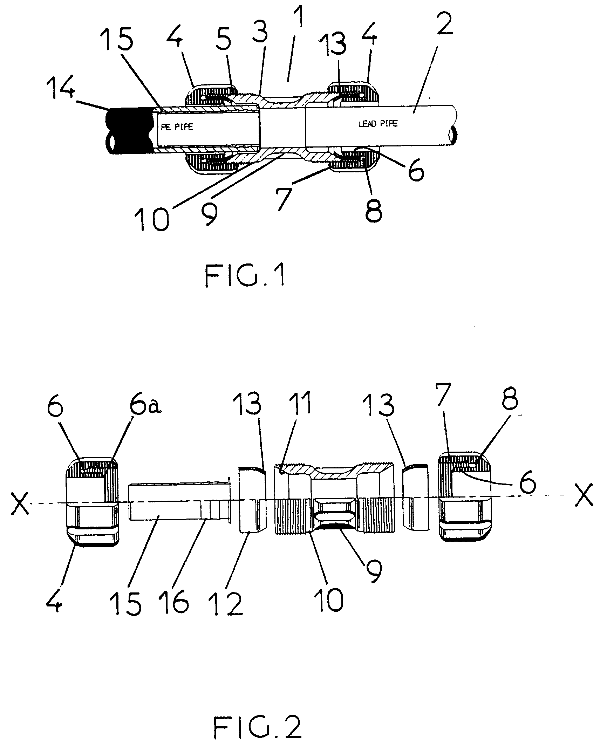

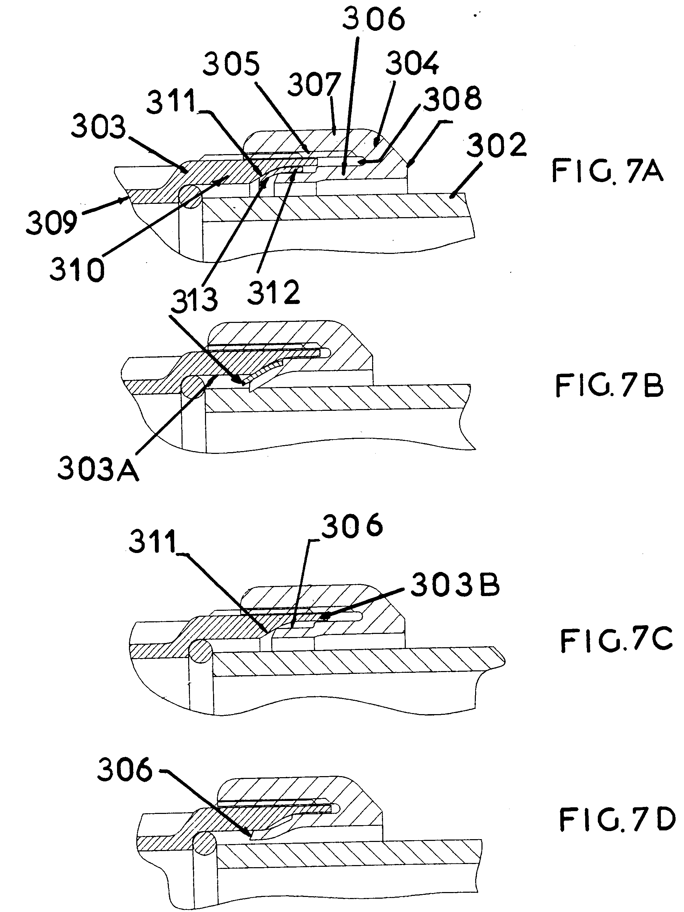

As shown in Figures 1 and 2, a lead pipe 2 is inserted for coupling within one end of a sleeve 3 of the pipe coupling 1. A nut 4 having internal thread 5 is screwed onto the externally threaded end of the sleeve 3. Nut 4 has integral inner 6 and outer 7 coaxial annular portions which are radially spaced apart to define an annular space 8 therebetween. Sleeve 3 has a central portion 9 and enlarged diameter end portions 10, the outer surfaces of which are threaded to engage the nut 4. At each end, the sleeve 3 is provided with an inner surface 11 which is radially outwardly inclined towards the axial end of the sleeve. Located between the sleeve 3 and nut 4 is an annular spacer element 12 of generally cylindrical form with an inwardly inclined end portion 13. The spacer may be formed of a deformable material such as copper or a plastics material. As the nut 4 is screwed onto the sleeve 3, the inclined surface 11 abuts against the outer surface of the inwardly inclined portion 13 of the spacer, such that further winding of the nut results in the cylindrical end of the spacer advancing into the annular space 8, the inclined surface 6a of inner portion 6 assisting the passage of the spacer into the space. The inwardly inclined portion 13 is also deformed radially inwardly by the force applied by the inclined surface 11; the radial deformation being illustrated more clearly in Figures 7A to 7D. As the spacer 12 is advanced into the annular space 8, the inner circumferential portion 6 of the nut is deformed inwardly by the pressure of the spacer 12 and surface 11, its diameter progressively decreasing until eventually it grips and seals against the pipe to complete the connection between the pipe and the connector.

The other end of the sleeve and its associated nut are constructed in a substantially identical manner (although they need not be), but in this case a polyethylene pipe 14 is held within the end of the sleeve. In order to reinforce the pipe 14 and strengthen it against crushing, a liner 15 is provided which is held within the bore of the pipe 14 by means of a frictional fit between the circumferential ribs 16 on the liner and the inner surface of pipe 14.

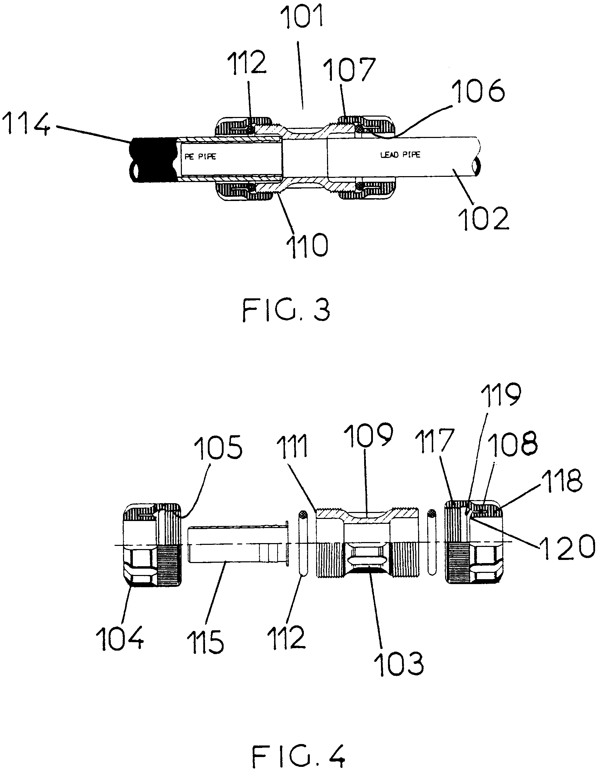

The embodiment illustrated in Figures 3 and 4 is similar in many respects to the embodiment shown in Figures 1 and 2 but differs therefrom in that instead of the cylindrical spacer element 12, there is provided a plastics O-ring 112 which is located between nut 104 and sleeve 103. Furthermore, in this embodiment the sleeve 103 does not have a radially outwardly inclined surface (cf surface 11 in Figures 1 and 2), but instead, has end surfaces 111 which lie in a plane generally perpendicular to the axis of the connector. However, it will be appreciated that the end surface 111 may be radially outwardly inclined if desired. The nut 104 also differs in its construction with regard to nut 4. Thus the nut has inner 106 and outer 107 annular portions analogous to the portions 6 and 7 in the embodiment of figures 1 and 2, but the outer annular portion 107 has an axially inner portion 117 of larger internal diameter which is threaded on its radially inner surface to engage the sleeve 103, and an axially outer position 118 of smaller internal diameter, the portions 117 and 118 being linked by a tapering portion 119. It will also be noted that the inner annular portion 106 has an axial end surface 120 which is inclined outwardly. The inner surface of tapering portion 119 and the surface 120 together define a tapering annular guide channel, the inner surface of tapering portion 119 serving to deform the O-ring 112 radially inwardly.

In use, the nut 104 is screwed onto the sleeve 103 such that the O-ring 112 is compressed between the end surface 111 and the inclined surfaces of the inner 106 and outer 107 portions of the nut 104. Further winding of the nut 104 causes the O-ring 112 to be deformed radially inwardly and be forced into the annular space 108, the tapering annular guide channel assisting this process, thereby resulting in the inner portion 106 deforming inwardly. In consequence the diameter of the inner portion 106 progressively decreases until eventually it grips and seals against the polyethylene or lead pipe.

As with the embodiment of Figures 1 and 2, the connector can be used to join pipes of the same type and size or pipes of differing materials and sizes. In Figures 3 and 4, a polyethylene pipe is shown as being retained within one end of the sleeve whilst a lead pipe is shown as being retained within the other end of the sleeve. The polyethylene pipe is protected against against crushing by means of an inner sleeve 115.

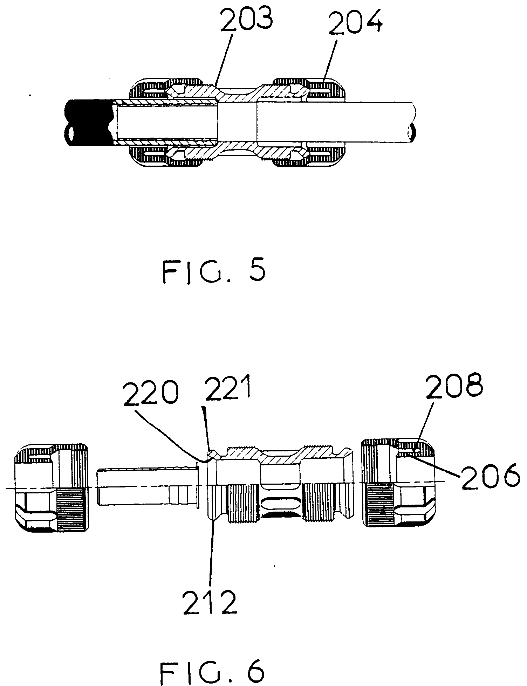

In the embodiment illustrated in Figures 5 and 6, the construction of nut 204 is substantially the same as the construction of the nut 104 in the embodiment of Figures 3 and 4. However, rather than the annular wedging member being a discrete element such as the spacer element 12 and O-ring 112 of the above embodiments, the wedging member is integral with the sleeve 203 and is constituted by an annular protrusion 212 at the axial end of the sleeve body. As can be seen , the annular protrusion has a wedge-shaped profile in cross section, the wedge-shaped being defined by outwardly inclined inner surface 220 and inwardly inclined outer surface 221. The connector operates in the same manner as the embodiments shown in the other Figures. Thus, as the nut is wound onto the sleeve, the wedging member 212 is deformed radially inwardly and is forced into the annular space 208 causing the inner circumferential portion 206 to deform inwardly to grip the pipe.

The role of the wedging element and the manner in which it enables a much wider range of pipe O.D values to be accommodated by the connector is illustrated in more detail in Figures 7A to 7D. In Figures 7A and 7B there is illustrated an arrangement wherein a pipe 302 is inserted for coupling within one end of sleeve 303. As can be seen, there is a substantial gap between the outer surface of the pipe 302 and the inner surface of the sleeve 303. Nut 304 having internal thread 305 is screwed onto the externally threaded end of the sleeve 303 in a manner analogous to the arrangement shown in Figures 1 and 2. Nut 304 has inner 306 and outer 307 coaxial annular portions separated by annular space 308. Sleeve 303 has a central portion 309 and enlarged diameter end portions 310, the inner surface 311 of which is radially inwardly inclined towards the central portion 309. Located between the sleeve 303 and nut 304 is an annular spacer element 312 of similar configuration to spacer element 12 in Figures 1 and 2. Spacer element 312 has an inwardly inclined end portion 313. As the nut 304 is screwed onto the sleeve 303, the inclined surface 311 abuts against the outer surface of the inwardly inclined portion 313 with the result that the spacer 312, and in particular its end portion 313, is deformed radially inwardly. The spacer 312 is also caused to advance into the annular space 308 thereby to deform the inner circumferential portion 306 inwardly so that it grips and seals against the pipe. If the nut 304 is wound far enough onto the sleeve 303, it can be seen from Figure 7B that the spacer 312 is deformed radially inwardly to such an extent that the inner end of end portion 313 protrudes into the bore of the sleeve 303, the inner diameter of the spacer 312 thus being smaller than the inner diameter of the sleeve portion 303A.

Figures 7C and 7D illustrate an arrangement in which the wedging member, i.e. spacer 312, has been omitted. When nut 304 is tightened onto the sleeve 303, the end portion 303B advances into the annular space 308, and the inner surface 311 abuts against the inner coaxial portion 306 to deform it radially inwardly. However, in the absence of the spacer element 312, the inner portion 306 cannot be deformed radially inwardly to the extent necessary for it to grip and seal against the pipe. Thus, the connector shown in Figures 7C and 7D can only accommodate pipes having a relatively narrow range of O.D. values.

It can be seen from the foregoing description that the pipe couplings of the present invention are advantageous in that the presence of the annualr wedging member enables the couplings to be used to connect pipes of a relatively wide range of outer diameter (O.D) values.

The aforementioned embodiments are by way of illustration only, and it will be appreciated by the skilled man that numerous modifications could be made to the illustrated embodiments without departing from the spirit and scope of the invention. All such modifications are intended to be encompassed by this application.

## Claims

1. A pipe coupling having a sleeve for fitting around an end of a pipe; an annular securing member for disposal about the end of the pipe, and for securing to the sleeve; and wedging means disposed about the pipe between the sleeve and the securing member; either the securing member or the sleeve being provided with radially inner and outer portions radially spaced apart to define a space therebetween; the securing member, sleeve and wedging means together forming a compression assembly whereby relative axial movement therebetween leading to compression of the wedging means between sleeve and securing member causes the wedging means to be deformed radially inwardly and to be thrust into the space between the radially inner and outer spaced apart portions to deform the inner portion radially inwardly such that it grips and seals against the pipe.

2. A pipe coupling according to Claim 1 wherein the securing member, sleeve and wedging means are configured such that when the outside diameter of the pipe is substantially less than the inner diameter of the sleeve, the wedging means can be deformed radially inwardly such that its inner diameter is reduced to a value less than the inner diameter of the sleeve.

3. A pipe coupling according to Claim 1 or Claim 2 wherein the securing member and/or sleeve are provided with a radially inwardly inclined surface which deforms the wedging means radially inwardly when said relative axial movement takes place.

4. A pipe coupling according to any one of the preceding Claims wherein the annular securing member is provided with the radially spaced apart radially inner and outer portions.

5. A pipe coupling according to any one of the preceding Claims wherein the sleeve is threaded and the annular securing member is in the form of a correspondingly threaded nut.

6. A pipe coupling according to any one of the preceding Claims wherein the sleeve is provided at both ends thereof with a compression assembly.

7. A pipe coupling according to any one of the preceding Claims wherein the wedging means is a discrete entity separate from the sleeve and securing member.

8. A pipe coupling according to any one of Claims 1 to 6 wherein the wedging means is an integral part of the sleeve or the securing member.

9. A pipe coupling according to any one of the preceding Claims wherein the wedging means is a unitary element, for example in the form of an annular wedging member disposed about the pipe.

10. A pipe coupling according to Claim 8 wherein the wedging means is an annular wedging member which is integral with the sleeve and extends axially from an axial end of the sleeve.

11. A pipe coupling according to Claim 7 wherein the wedging means takes the form of a ring (e.g. a plastics O-ring), or a generally cylindrical spacer.
